# FASCICULE DE BREVET EUROPEEN

(11) **EP 3 292 802 B1**
(45) Date de publication et mention de la délivrance du brevet: **02.01.2019**
(21) Numéro de dépôt: 17185018.3
(22) Date de dépôt: 04.08.2017
(51) Int. Cl.: A47J 27/21

(54) **BOUILLOIRE COMPACTE MUNIE D'UNE PAROI INCLINÉE**
KOMPAKTER WASSERKOCHER, DER MIT EINER SCHRÄGEN WAND AUSGESTATTET IST
COMPACT KETTLE PROVIDED WITH AN ANGLED WALL

(30) Priorité: 13.09.2016 FR 1658536
(43) Date de publication de la demande: 14.03.2018
(73) Titulaire: SEB S.A., 69130 Ecully (FR)
(72) Inventeur: BRIERE, Matthieu, 21120 GEMEAUX (FR); RUSSIER, Fabien, 21000 DIJON (FR)
(74) Mandataire: Bourrières, Patrice

(56) Documents cités:
- EP-A1- 0 786 221
- GB-A- 2 323 021
- GB-A- 2 332 095

## Description

La présente invention concerne un appareil de chauffage de liquides, notamment une bouilloire électrique, comportant un corps formant un récipient de réception de l'eau, un fond chauffant électrique et un dispositif de détection de l'ébullition.

On connait par exemple du brevet EP0786221 ou du brevet GB2332095, une bouilloire comprenant un corps agencé au-dessus d'un fond chauffant électrique et un conduit vapeur destiné à convoyer la vapeur dégagée lors de l'ébullition d'une partie supérieure dudit corps vers un capteur de détection de vapeur, ledit conduit de vapeur comportant une ouverture d'entrée agencée sur une face interne du corps, au-dessus d'un niveau de remplissage maximum en eau du corps.

Dans une telle bouilloire, lors de la chauffe, il se crée des flux ascendants d'eau et de vapeur qui vont créer à la surface libre de l'eau des remous et des projections de plus en plus importants, à mesure que l'on s'approche de l'ébullition. Pour éviter que les projections d'eau pénètrent par l'ouverture d'entrée dans le conduit vapeur et dégradent le capteur de détection vapeur, on limite le volume utile de la bouilloire par un niveau de remplissage maximum qui laisse un volume d'air important au-dessus de la surface libre de l'eau. Le volume d'air peut représenter jusqu'à 40% du volume total de la bouilloire. Ainsi, la distance entre l'ouverture du conduit vapeur et la surface de l'eau au niveau de remplissage maximum est suffisante pour que les projections ne pénètrent pas dans le conduit vapeur.

En conséquence, pour un volume utile de chauffe donné, le volume total de la bouilloire est important et un utilisateur peut rencontrer des difficultés pour lui trouver une place pour l'utiliser ou la ranger. De plus, le conditionnement de la bouilloire est volumineux et le cout de l'acheminement de la bouilloire de l'usine de production vers l'utilisateur est élevé.

Un but de la présente invention est de remédier aux inconvénients précités et de proposer une bouilloire compacte, qui présente un ratio volume utile sur le volume total optimisé.

Un autre but de la présente invention est de proposer une bouilloire qui présente une conception simple et qui soit économique à mettre en oeuvre.

Ces buts sont atteints avec une bouilloire comprenant un corps agencé au-dessus d'un fond chauffant électrique et un conduit vapeur destiné à convoyer la vapeur dégagée lors de l'ébullition vers un capteur de détection de vapeur, ledit conduit de vapeur comportant une ouverture d'entrée agencée sur une partie supérieure d'une face interne du corps, au-dessus d'un niveau de remplissage maximum en eau du corps, caractérisée en ce qu'elle comporte un dispositif de protection contre l'intrusion de l'eau dans le conduit vapeur lors de l'ébullition qui est réalisé en matière plastique et qui comprend une paroi s'étendant sous l'ouverture d'entrée et présentant, dans un plan de coupe vertical transversal à la face interne, une première portion s'étendant depuis la face interne sous l'ouverture d'entrée, vers le bas en s'éloignant de la face interne et prolongée par une deuxième portion s'étendant vers le bas en se rapprochant de la face interne pour la rejoindre, la deuxième portion s'étendant de manière transversale à un flux d'eau et de vapeur ascendant selon une direction verticale en formant avec ladite direction verticale un angle α inférieur à 80°, de préférence inférieur à 45°, et en ce que le corps présente une section transversale de périmètre P au niveau de l'ouverture d'entrée, la paroi s'étendant de part et d'autre de l'ouverture d'entrée sur au moins 5% du périmètre P, de préférence sur au moins 10% du périmètre P.

Ainsi, la paroi, notamment la deuxième portion s'étend dans l'eau, depuis la face interne, de manière inclinée, transversalement aux flux ascendants d'eau et de vapeur, pour au moins partiellement dévier un flux ascendant d'eau et de vapeur lors de l'ébullition et ainsi l'écarter de l'ouverture d'entrée. La paroi qui s'étend de part et d'autre de l'ouverture sur au moins 20% du périmètre P protège l'ouverture d'entrée notamment sur ses extrémités latérales, le long de la face interne.

Un tel agencement permet, lors de l'ébullition, de réduire les turbulences de la surface de l'eau et de limiter l'amplitude des projections aux abords de l'ouverture d'entrée du conduit vapeur. Ainsi, la distance entre l'ouverture du conduit vapeur et la surface de l'eau au niveau de remplissage maximum peut être faible, sans risque d'intrusion d'eau dans le conduit vapeur pour permettre d'obtenir un volume d'air limité au-dessus de la surface libre de l'eau. En conséquence, la bouilloire peut être plus compacte, notamment en hauteur.

Par niveau de remplissage maximum, on comprend le niveau d'eau maximum matérialisé sur le corps de la bouilloire, par exemple par un repère.

De manière avantageuse, le dispositif de protection est réalisé par injection en matière plastique, notamment en polypropylène, en acrylonitrile butadiène styrène ou en polycarbonate.

Avantageusement, le corps présente une section transversale circulaire de rayon R et de périmètre P et la paroi s'inscrit dans un secteur angulaire d'angle β et formé par deux segments radiaux R1, R2, l'ouverture d'entrée étant agencée à proximité du milieu du secteur angulaire β.

Le dispositif de protection contre l'intrusion de l'eau dans le conduit vapeur lors de l'ébullition muni de la paroi est particulièrement efficace dans une bouilloire de section transversale circulaire.

De préférence, la deuxième portion s'étend radialement dans un plan de coupe vertical, transversal à la face interne sur une distance D supérieure à 5% du rayon R, de préférence supérieure à 10% du rayon R.

Avantageusement, la paroi présente une hauteur H dans un plan de coupe vertical, transversal à la face interne, la hauteur H étant supérieure à 15% d'une hauteur du corps.

Par hauteur du corps, on comprend la hauteur entre un plan horizontal passant par le dessus du fond chauffant et un plan horizontal passant par le bas du couvercle.

De telles dispositions permettent lorsque la bouilloire est remplie jusqu'au niveau de remplissage maxi d'avoir une partie de la paroi suffisamment immergée dans l'eau pour dévier vers le centre de la bouilloire le flux ascendant d'eau et de vapeur lors de l'ébullition et ainsi protéger l'ouverture d'entrée des projections d'eau.

De préférence, la paroi comporte, dans un plan de coupe vertical transversal à la face interne, une section constante de part et d'autre de l'ouverture d'entrée.

Ainsi, la paroi comporte notamment une deuxième portion qui s'étend de manière régulière dans le flux ascendant d'eau et de vapeur pour créer, à l'opposé de l'ouverture d'entrée et de la face interne, une zone équilibrée et symétrique de réduction des turbulences de la surface de l'eau et de limitation de l'amplitude des projections.

Avantageusement, la paroi et la face interne définissent entre elles un volume V dans lequel l'eau peut pénétrer, notamment par deux ouvertures situées à deux extrémités latérales de la paroi.

L'eau présente entre la paroi et la face interne est peu affectée par l'ébullition et ainsi cette eau n'est pas sujette à être projetée vers l'ouverture d'entrée.

De préférence, la première portion et la deuxième portion comportent une zone de jonction qui présente une rupture brusque de pente.

Ainsi, le flux d'eau et de vapeur ascendant à l'aplomb de l'ouverture d'entrée rencontre la deuxième portion inclinée puis une rupture brusque de pente. En conséquence, lorsque l'ébullition est importante et que la vitesse du flux d'eau et de vapeur ascendant est élevée, ce flux est dévié vers l'avant, à l'opposé de l'ouverture d'entrée.

Avantageusement, la deuxième portion s'étend vers le bas depuis une ligne qui est contenue dans un plan horizontal, sous un niveau de remplissage maximum matérialisé dans le corps.

Ainsi, la deuxième portion qui est immergée dans l'eau dévie le flux ascendant d'eau et de vapeur dés le début de l'ébullition.

De préférence, la partie supérieure de la face interne présente une rainure, avantageusement en forme de U dans un plan de coupe vertical, l'ouverture d'entrée étant agencée dans la rainure.

Cette disposition permet d'obtenir une protection complémentaire de la paroi pour protéger l'ouverture d'entrée contre les projections d'eau.

Avantageusement, le dispositif de protection comporte une portion d'extrémité du conduit vapeur et le conduit vapeur s'étend le long de la première portion.

De préférence, le dispositif de protection est constitué par un module rapporté contre la face interne.

Ainsi, le dispositif de protection forme une pièce distincte dans la bouilloire et peut être adapté facilement, sans grosses modifications dans une bouilloire traditionnelle.

De manière avantageuse, le dispositif de protection ne comporte pas de partie active autre que la paroi pour dévier un flux ascendant d'eau et de vapeur lors de l'ébullition.

On peut considérer que la portion d'extrémité ne dévie pas le flux ascendant d'eau et de vapeur lors de l'ébullition, mais protège des projections d'eau.

Ainsi, le dispositif de protection est compact et économique à mettre en oeuvre.

Avantageusement, la bouilloire comporte un bec verseur agencé de manière diamétralement opposée à l'ouverture d'entrée et la paroi dévie le flux ascendant d'eau et de vapeur lors de l'ébullition vers le bec verseur.

De préférence, le corps comporte une ouverture traversante vers le bec verseur et l'ouverture traversante est agencée sous la surface de l'eau au niveau de remplissage maximum.

Ainsi, au niveau de remplissage maximum, l'eau présente dans l'ouverture empêche les projections d'eau de sortir par le bec.

L'invention sera mieux comprise à l'étude des modes de réalisation pris à titre nullement limitatif et illustrés dans les figures annexées dans lesquelles :
- La figure 1 illustre une vue en perspective d'une bouilloire comportant un dispositif de protection contre l'intrusion de l'eau dans un conduit vapeur lors de l'ébullition selon un mode particulier de réalisation de l'invention.
- La figure 2 illustre une vue en perspective de la bouilloire sans le corps illustrée sur la figure 1.
- La figure 3 illustre une vue en coupe III-III de la bouilloire illustrée sur la figure 1.
- La figure 4 illustre une vue de détail IV de la bouilloire illustrée sur la figure 3.

On notera que, dans ce document, les termes «horizontal», «vertical», «inférieur», «supérieur», «haut», «bas», employés pour décrire la bouilloire, font référence à cette bouilloire en situation d'usage, lorsqu'elle est posée sur un plan de travail horizontal.

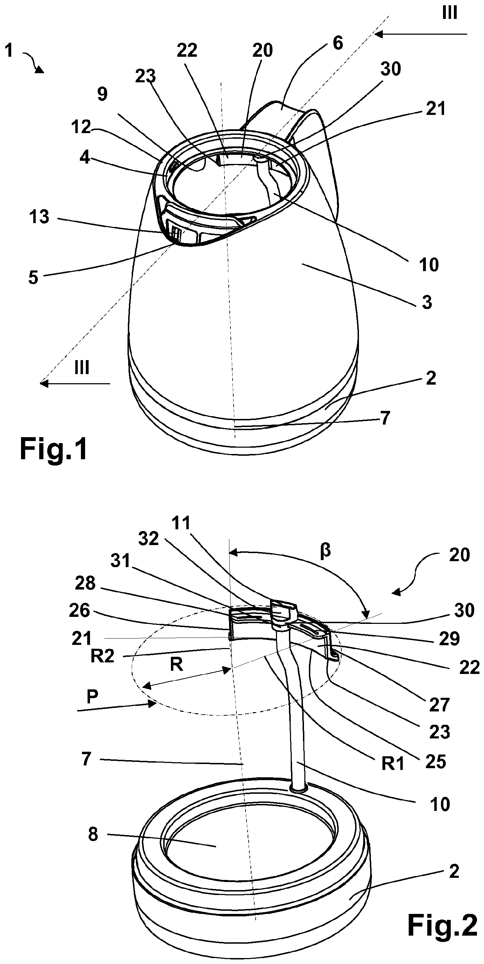

Dans l'exemple de réalisation représenté aux figures 1 à 4, une bouilloire 1 comporte un socle 2 alimenté électriquement par un cordon (non représenté sur les figures) et un corps 3 formant un réceptacle pour l'eau. Le corps 3 comprend une ouverture supérieure 4 de remplissage qui est fermée par un couvercle (non représenté sur les figures). La bouilloire 1 comprend un bec verseur 5 situé au niveau de l'ouverture supérieure 4 et une poignée 6 située à l'opposé du bec verseur 5 par rapport à l'ouverture supérieure 4. Le corps 3 a une forme sensiblement cylindrique de rayon R et comprend un axe vertical 7. Le couvercle est amovible par rapport au corps 3 et le couvercle est destiné à être assemblé sur le corps 3 selon un mouvement de translation sensiblement parallèle à l'axe vertical 7 du corps 3.

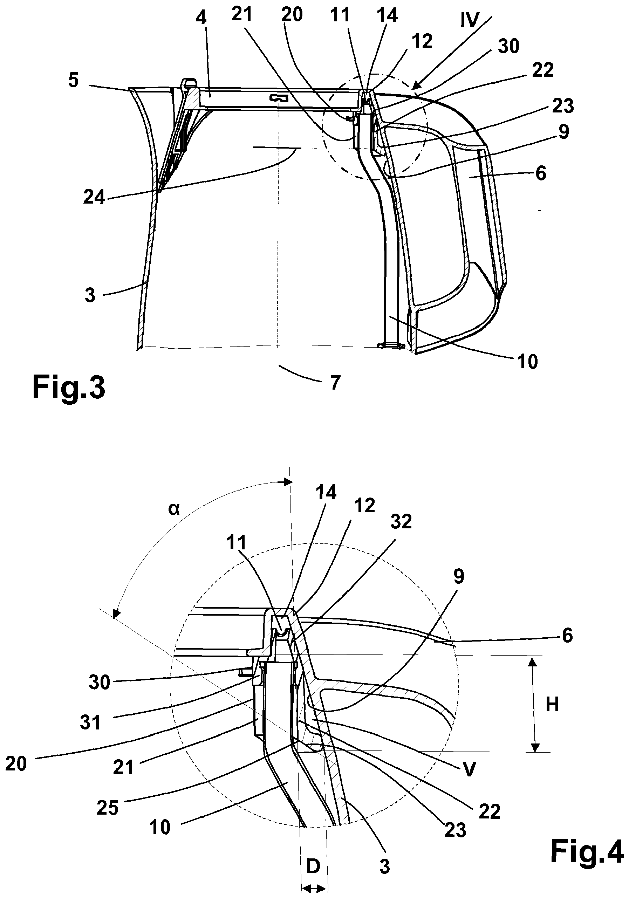

Le socle 2 comporte un fond chauffant 8 formé d'une coupelle en acier inoxydable sous laquelle sont agencés un diffuseur en aluminium et un élément chauffant. La bouilloire 1 comporte un conduit vapeur 10 destiné à convoyer la vapeur dégagée lors de l'ébullition d'une partie supérieure du corps 3 vers un capteur de détection de vapeur (non représenté sur les figures) agencé dans le socle 2. Un afflux de vapeur sur le capteur de détection de vapeur déclenche la coupure de l'alimentation électrique du fond chauffant 8. Le corps 3 comporte un rebord supérieur 12 qui définit l'ouverture supérieure 4. Le conduit vapeur 10 s'étend verticalement le long d'une face interne 9 du corps 3 et comporte une ouverture d'entrée 11. La face interne 9 présente au niveau du rebord supérieur 12 une rainure 14 en forme de U. L'ouverture d'entrée 11 est agencée dans la rainure 14 (Fig.3 et 4).

La bouilloire 1 comporte un dispositif de protection 20 contre l'intrusion de l'eau dans l'ouverture d'entrée 11 du conduit vapeur 10 lors de l'ébullition. Le dispositif de protection 20 comprend une paroi 21 s'étendant sous l'ouverture d'entrée 11, depuis la face interne 9 et qui présente des première et deuxième portions 22, 23. La première portion 22 s'étend sous l'ouverture d'entrée 11 depuis la face interne 9 vers l'intérieur du corps 3, en s'éloignant de la face interne 9. La première portion 22 est prolongée par la deuxième portion 23 qui s'étend vers le bas pour rejoindre la face interne 9 et venir en appui sur cette face interne 9. La deuxième portion 23 s'étend de manière transversale à un flux d'eau et de vapeur ascendant selon une direction verticale le long de l'axe vertical 7, en formant avec cette direction verticale un angle α égal à 45°.

Le corps 3 présente sous le rebord supérieur 12 une section transversale circulaire de rayon R et de périmètre P (Fig.2) et le corps 3 présente une section transversale circulaire de rayon R et de périmètre P et la paroi s'inscrit dans un secteur angulaire d'angle β de 30° et formé par deux segments radiaux R1, R2, l'ouverture d'entrée étant agencée à proximité du milieu du secteur angulaire β. Ainsi, la paroi 21 s'étend de part et d'autre de l'ouverture d'entrée 11 sur 8% du périmètre P.

Tel que visible à la figure 4, dans un plan de coupe vertical, transversal à la face interne 9, la première portion 22 s'étend sensiblement verticalement par rapport à la face interne 9 qui est inclinée. La deuxième portion 23 s'étend de manière linéaire et forme avec la première portion 22 l'angle a. Ainsi, la première portion 22 et la deuxième portion 23 comportent une zone de jonction 25 qui présente une rupture brusque de pente.

La paroi 21 présente une épaisseur constante et s'étend en vis-à-vis de la face interne 9. La paroi 21 et la face interne 9 définissent un volume V (Fig.4) dans lequel l'eau peut pénétrer, notamment par deux ouvertures situées aux extrémités latérales 26, 27 de la paroi 21 (Fig.2).

Le dispositif de protection 20 comprend une portion d'extrémité 30 supérieure du conduit vapeur 10 de forme tubulaire qui présente une partie tubulaire 31 circulaire se prolongeant par une partie tubulaire 32 sensiblement rectangulaire. La partie tubulaire 32 sensiblement rectangulaire est agencée dans la rainure 14. L'ouverture d'entrée 11 est ménagée dans la partie tubulaire 32 sensiblement rectangulaire. Le conduit vapeur 10 s'étend le long de la première portion 22 à partir de la partie tubulaire 31 circulaire dans laquelle il est engagé de manière étanche.

Le dispositif de protection 20 est constitué par un module rapporté contre la face interne 9 et forme une pièce distincte dans la bouilloire 1, notamment distincte du corps 3. Le dispositif de protection 20 est réalisé par injection en matière plastique, notamment en polypropylène, en acrylonitrile butadiène styrène ou en polycarbonate. Le dispositif de protection 20 comporte des moyens de fixation sur le corps 3 formés par deux pattes perforées 28, 29 qui s'étendent perpendiculairement à la première portion 22 de la paroi 21. Les deux pattes perforées 28, 29 coopèrent avec le rebord supérieur 12 sur lequel elles sont fixées, par exemple par vissage.

Conformément à la figure 1, le bec verseur 5 est agencé de manière diamétralement opposée à l'ouverture d'entrée 11. Le corps 3 comporte des ouvertures traversantes 13 vers le bec verseur 5 et les ouvertures traversantes 13 sont agencées pour être sous la surface de l'eau au niveau de remplissage maximum.

En fonctionnement, l'utilisateur qui veut chauffer une grande quantité d'eau, remplit la bouilloire 1 au niveau de remplissage maximum et met la bouilloire 1 en marche. Le fond chauffant 8 va chauffer l'eau contenue dans le corps 3 et, à mesure que l'on s'approche de l'ébullition, le flux ascendant d'eau et de vapeur va être généré depuis le fond chauffant 8 vers la surface libre de l'eau. Le flux ascendant d'eau et de vapeur à l'aplomb du dispositif de protection 20 va être dévié par la deuxième portion 23 de la paroi 21. Lorsque l'ébullition est importante et que la vitesse du flux d'eau et de vapeur ascendant est élevée, la rupture brusque de pente de la zone de jonction 25 entre la première portion 22 et la deuxième portion 23 fait que ce flux est dévié vers l'avant, à l'opposé de l'ouverture d'entrée. La vapeur générée par l'ébullition va s'accumuler au-dessus du niveau de l'eau puis passer dans le conduit vapeur 10, par l'ouverture d'entrée 11, pour atteindre le capteur de détection vapeur qui va déclencher l'arrêt du fond chauffant 8. Le dispositif de protection 20 permet de réduire les turbulences de la surface de l'eau ainsi que les projections aux abords de l'ouverture d'entrée 11 du conduit vapeur 10 pour éviter l'introduction d'eau dans l'ouverture d'entrée 11 pendant le temps nécessaire pour produire suffisamment de vapeur et déclencher l'arrêt du fond chauffant 8. Un tel dispositif de protection 20 permet de réduire le volume d'air au-dessus de la surface libre de l'eau à 20% du volume total de la bouilloire.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, la première portion et la deuxième portion peuvent présenter, dans un plan de coupe vertical, transversal à la face interne une forme incurvée. Dans cette variante, la première portion et la deuxième portion comportent toujours une zone de jonction qui présente une rupture brusque de pente.

## Revendications

1. Bouilloire (1) comprenant un corps (3) agencé au-dessus d'un fond chauffant (8) électrique et un conduit vapeur (10) destiné à convoyer la vapeur dégagée lors de l'ébullition vers un capteur de détection de vapeur, ledit conduit de vapeur (10) comportant une ouverture d'entrée (11) agencée sur une partie supérieure d'une face interne (9) du corps (3), au-dessus d'un niveau de remplissage maximum en eau du corps, ladite bouilloire (1) comportant un dispositif de protection (20) contre l'intrusion de l'eau dans le conduit vapeur (10) lors de l'ébullition qui est réalisé en matière plastique et qui comprend une paroi (21) s'étendant sous l'ouverture d'entrée (11) **caractérisée en ce que** la paroi (21) présente, dans un plan de coupe vertical transversal à la face interne (9), une première portion (22) s'étendant depuis la face interne (9) sous l'ouverture d'entrée (11), vers le bas en s'éloignant de la face interne (9) et prolongée par une deuxième portion (23) s'étendant vers le bas en se rapprochant de la face interne (9) pour la rejoindre, la deuxième portion (23) s'étendant de manière transversale à un flux d'eau et de vapeur ascendant selon une direction verticale en formant avec ladite direction verticale un angle α inférieur à 80°, de préférence inférieur à 45°, et **en ce que** le corps (3) présente une section transversale de périmètre P au niveau de l'ouverture d'entrée (11), la paroi (21) s'étendant de part et d'autre de l'ouverture d'entrée (11) sur au moins 5% du périmètre P, de préférence sur au moins 10% du périmètre P.

2. Bouilloire (1) selon la revendication 1, **caractérisée en ce que** le corps (3) présente une section transversale circulaire de rayon R et de périmètre P et la paroi (21) s'inscrit dans un secteur angulaire d'angle β et formé par deux segments radiaux R1, R2, l'ouverture d'entrée (11) étant agencée à proximité du milieu du secteur angulaire β.

3. Bouilloire (1) selon la revendication 2, **caractérisée en ce que** la deuxième portion (23) s'étend radialement dans un plan de coupe vertical, transversal à la face interne (9) sur une distance D supérieure à 5% du rayon R, de préférence supérieure à 10% du rayon R.

4. Bouilloire (1) selon l'une quelconque des revendications précédentes, **caractérisée en ce que** la paroi (21) présente une hauteur H dans un plan de coupe vertical, transversal à la face interne (9), la hauteur H étant supérieure à 15% d'une hauteur du corps (3).

5. Bouilloire (1) selon l'une quelconque des revendications précédentes, **caractérisée en ce que** la paroi (21) comporte dans un plan de coupe vertical, transversal à la face interne (9), une section constante de part et d'autre de l'ouverture d'entrée (11).

6. Bouilloire (1) selon l'une quelconque des revendications précédentes, **caractérisée en ce que** la paroi (21) et la face interne (9) définissent entre elles un volume V dans lequel l'eau peut pénétrer, notamment par deux ouvertures situées à deux extrémités latérales (26, 27) de la paroi (21).

7. Bouilloire (1) selon l'une quelconque des revendications précédentes, **caractérisée en ce que** la première portion (22) et la deuxième portion (23) comportent une zone de jonction (25) qui présente une rupture brusque de pente.

8. Bouilloire (1) selon l'une quelconque des revendications précédentes, **caractérisée en ce que** la deuxième portion (22) s'étend vers le bas depuis une ligne (24) qui est contenue dans un plan horizontal, sous un niveau de remplissage maximum matérialisé dans le corps (3).

9. Bouilloire (1) selon l'une quelconque des revendications précédentes, **caractérisée en ce que** la partie supérieure de la face interne (9) présente une rainure (14), avantageusement en forme de U dans un plan de coupe vertical, l'ouverture d'entrée (11) étant agencée dans la rainure (14).

10. Bouilloire (1) selon l'une quelconque des revendications précédentes, **caractérisée en ce que** le dispositif de protection (20) comporte une portion d'extrémité (30) du conduit vapeur (10) et **en ce que** le conduit vapeur (10) s'étend le long de la première portion (22).

11. Bouilloire (1) selon l'une quelconque des revendications précédentes, **caractérisée en ce que** le dispositif de protection (20) est constitué par un module rapporté contre la face interne (9).

12. Bouilloire (1) selon l'une quelconque des revendications précédentes, **caractérisée en ce qu'**elle comporte un bec verseur (5) agencé de manière diamétralement opposée à l'ouverture d'entrée (11) et **en ce que** la paroi (21) dévie un flux ascendant d'eau et de vapeur lors de l'ébullition vers le bec verseur (5).

## Patentansprüche

1. Wasserkocher (1), umfassend einen Körper (3), der über einem elektrischen Heizboden (8) angeordnet ist, und eine Dampfleitung (10), die dazu vorgesehen ist, den Dampf, der beim Sieden freigesetzt wird, zu einem Dampferkennungssensor hin zu befördern, wobei die Dampfleitung (10) eine Einlassöffnung (11) umfasst, die an einem oberen Teil einer Innenfläche (9) des Körpers (3) über einem maximalen Wasserfüllniveau des Körpers angeordnet ist, wobei der Wasserkocher (1) eine Vorrichtung zum Schutz (20) gegen das Eindringen des Wassers beim Sieden in die Dampfleitung (10) umfasst, die aus Kunststoffmaterial ausgeführt ist und die eine Wand (21) umfasst, welche sich unter der Einlassöffnung (11) erstreckt, **dadurch gekennzeichnet, dass** die Wand (21) in einer vertikalen Schnittebene quer zur Innenfläche (9) einen ersten Abschnitt (22) aufweist, der sich von der Innenfläche (9) aus unter der Einlassöffnung (11) nach unten hin erstreckt, wobei er sich von der Innenfläche (9) entfernt, und der von einem zweiten Abschnitt (23) verlängert wird, welcher sich nach unten hin erstreckt, wobei er sich der Innenfläche (9) nähert, um mit derselben zusammenzulaufen, wobei sich der zweite Abschnitt (23) quer zu einem entlang einer vertikalen Richtung aufsteigenden Wasser- und Dampfstrom erstreckt, wobei er zu der vertikalen Richtung einen Winkel α von kleiner als 80°, vorzugsweise kleiner als 45° bildet, und dadurch, dass der Körper (3) einen Querschnitt mit Umfang P auf dem Niveau der Einlassöffnung (11) aufweist, wobei sich die Wand (21) auf beiden Seiten der Einlassöffnung (11) über mindestens 5 % des Umfangs P, vorzugsweise über mindestens 10 % des Umfangs P erstreckt.

2. Wasserkocher (1) nach Anspruch 1, **dadurch gekennzeichnet, dass** der Körper (3) einen kreisrunden Querschnitt mit Radius R und mit Umfang P aufweist, und die Wand (21) in einem Winkelsektor mit Winkel β, und von zwei radialen Segmenten R1, R2 gebildet, steht, wobei die Einlassöffnung (11) in Nähe der Mitte des Winkelsektors β angeordnet ist.

3. Wasserkocher (1) nach Anspruch 2, **dadurch gekennzeichnet, dass** sich der zweite Abschnitt (23) radial in einer vertikalen Schnittebene quer zur Innenfläche (9) über eine Distanz D erstreckt, die größer als 5 % des Radius R, vorzugsweise größer als 10 % des Radius R ist.

4. Wasserkocher (1) nach einem der vorstehenden Ansprüche, **dadurch gekennzeichnet, dass** die Wand (21) eine Höhe H in einer vertikalen Schnittebene quer zur Innenfläche (9) aufweist, wobei die Höhe H größer als 15 % einer Höhe des Körpers (3) ist.

5. Wasserkocher (1) nach einem der vorstehenden Ansprüche, **dadurch gekennzeichnet, dass** die Wand (21) in einer vertikalen Schnittebene quer zur Innenfläche (9) einen konstanten Querschnitt auf beiden Seiten der Einlassöffnung (11) umfasst.

6. Wasserkocher (1) nach einem der vorstehenden Ansprüche, **dadurch gekennzeichnet, dass** die Wand (21) und die Innenfläche (9) zwischen sich ein Volumen V definieren, in das das Wasser insbesondere über zwei Öffnungen, die an zwei seitlichen Enden (26, 27) der Wand (21) liegen, dringen kann.

7. Wasserkocher (1) nach einem der vorstehenden Ansprüche, **dadurch gekennzeichnet, dass** der erste Abschnitt (22) und der zweite Abschnitt (23) eine Anschlusszone (25) umfassen, die eine abrupte Neigungsunterbrechung aufweist.

8. Wasserkocher (1) nach einem der vorstehenden Ansprüche, **dadurch gekennzeichnet, dass** sich der zweite Abschnitt (22) von einer Linie (24) aus, die in einer horizontalen Ebene enthalten ist, unter einem maximalen Füllniveau, das im Körper (3) ausgestaltet ist, nach unten hin erstreckt.

9. Wasserkocher (1) nach einem der vorstehenden Ansprüche, **dadurch gekennzeichnet, dass** der obere Teil der Innenfläche (9) eine Nut (14), vorteilhafterweise in U-Form, in einer vertikalen Schnittebene aufweist, wobei die Einlassöffnung (11) in der Nut (14) angeordnet ist.

10. Wasserkocher (1) nach einem der vorstehenden Ansprüche, **dadurch gekennzeichnet, dass** die Schutzvorrichtung (20) einen Endabschnitt (30) der Dampfleitung (10) umfasst, und dadurch, dass sich die Dampfleitung (10) entlang des ersten Abschnitts (22) erstreckt.

11. Wasserkocher (1) nach einem der vorstehenden Ansprüche, **dadurch gekennzeichnet, dass** die Schutzvorrichtung (20) aus einem Modul besteht, das an der Innenfläche (9) angebracht ist.

12. Wasserkocher (1) nach einem der vorstehenden Ansprüche, **dadurch gekennzeichnet, dass** er eine Tülle (5) umfasst, die der Einlassöffnung (11) diametral gegenüberliegend angeordnet ist, und dadurch, dass die Wand (21) einen beim Sieden aufsteigenden Wasser- und Dampfstrom zur Tülle (5) hin ablenkt.

## Claims

1. Kettle (1) comprising a body (3) arranged above an electrical heating base (8) and a steam conduit (10) intended to convey the steam released during boiling towards a steam detection sensor, said steam conduit (10) comprising an inlet opening (11) arranged on an upper part of an inner face (9) of the body (3), above a maximum water filling level of the body, said kettle (1) comprising a device for protecting (20) against the intrusion of water in the steam conduit (10) during boiling which is made of plastic material and which comprises a wall (21) extending under the inlet opening (11), **characterised in that** the wall (21) has, in a vertical cross-section plane, transverse to the inner face (9), a first portion (22) extending from the inner face (9) under the inlet opening (11), towards the bottom by extending from the inner face (9) and extended by a second portion (23) extending towards the bottom by drawing nearer to the inner face (9) to join it, the second portion (23) extending transversally to an ascending water and steam stream along a vertical direction by forming with said vertical direction, an angle α less than 80°, preferably less than 45°, and **in that** the body (3) has a cross-section of perimeter P at the level of the inlet opening (11), the wall (21) extending on either side of the inlet opening (11) over at least 5% of the perimeter P, preferably over at least 10% of the perimeter P.

2. Kettle (1) according to claim 1, **characterised in that** the body (3) has a circular cross-section of radius R and of perimeter P and the wall (21) enters into an angular sector of angle β and formed by two radial segments R1, R2, the inlet opening (11) being arranged in the proximity of the middle of the angular sector β.

3. Kettle (1) according to claim 2, **characterised in that** the second portion (23) extends radially into a vertical cross-section plane, transverse to the inner face (9) over a distance D greater than 5% of the radius R, preferably greater than 10% of the radius R.

4. Kettle (1) according to any one of the preceding claims, **characterised in that** the wall (21) has a height H in a vertical cross-section plane, transverse to the inner face (9), the height H being greater than 15% of a height of the body (3).

5. Kettle (1) according to any one of the preceding claims, **characterised in that** the wall (21) comprises, in a vertical cross-section plane, transverse to the inner face (9), a constant section on either side of the inlet opening (11).

6. Kettle (1) according to any one of the preceding claims, **characterised in that** the wall (21) and the inner face (9) define between them a volume V wherein the water can enter, in particular through two openings situated at two lateral ends (26, 27) of the wall (21).

7. Kettle (1) according to any one of the preceding claims, **characterised in that** the first portion (22) and the second portion (23) comprise a joining zone (25) which has a sudden sloped rupture.

8. Kettle (1) according to any one of the preceding claims, **characterised in that** the second portion (22) extends towards the bottom from a line (24) which is contained in a horizontal plane, under a maximum filling level, materialised in the body (3).

9. Kettle (1) according to any one of the preceding claims, **characterised in that** the upper part of the inner face (9) has a groove (14), advantageously U-shaped, in a vertical cross-section plane, the inlet opening (11) being arranged in the groove (14).

10. Kettle (1) according to any one of the preceding claims, **characterised in that** the protective device (20) comprises an end portion (30) of the steam conduit (10) and **in that** the steam conduit (10) extends along the first portion (22).

11. Kettle (1) according to any one of the preceding claims, **characterised in that** the protective device (20) is constituted by a module added against the inner face (9).

12. Kettle (1) according to any one of the preceding claims, **characterised in that** it comprises a spout lip (5) arranged diametrically opposite the inlet opening (11) and **in that** the wall (21) diverts an ascending water stream and the steam during boiling towards the spout lip (5).
